# EUROPÄISCHE PATENTSCHRIFT

(11) **EP 1 691 115 B1**
(45) Veröffentlichungstag und Bekanntmachung des Hinweises auf die Patenterteilung: **16.09.2009**
(21) Anmeldenummer: 06100859.5
(22) Anmeldetag: 25.01.2006
(51) Int. Cl.: F16K 5/06

(54) **Ventilanordnung mit druckabhängig gesteuertem Ventil**
Valve assembly with a pressure regulated valve
Ensemble de soupape avec une vanne sensible à la pression

(30) Priorität: 14.02.2005 DE 102005006790
(43) Veröffentlichungstag der Anmeldung: 16.08.2006
(73) Patentinhaber: HANS SASSERATH & CO KG, 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- DE-A1- 3 835 144
- DE-B- 1 209 381
- US-A- 5 960 818
- PATENT ABSTRACTS OF JAPAN Bd. 012, Nr. 109 (M-682), 8. April 1988 (1988-04-08) & JP 62 237175 A (BABCOCK HITACHI KK), 17. Oktober 1987 (1987-10-17)

## Beschreibung

Die Erfindung betrifft eine Ventilanordnung für eine Flüssigkeit mit einem Absperrventil, welches den Durchgang von einem Trinkwasser-Versorgungssystem zu einem stromab von dem Absperrventil angeschlossenen Warmwasser-Heizungssystem beherrscht und mittels eines Drucksensors vom Druck dieses stromabwärtigen Systems gesteuert ist.

Das stromab angeschlossene System ist von einem Warmwasser-Heizungssystem gebildet, das aus einem Trinkwassersystem als Versorgungssystem gefüllt oder nachgefüllt wird. Dabei soll ein vorgegebener Druck in dem Warmwasser-Heizungssystem erreicht und gehalten werden. Das geschieht üblicherweise durch Ablesen eines Manometers. Wenn der gewünschte Druck erreicht ist, wird manuell ein Absperrventil geschlossen, welches die Wasserzufuhr zu dem Warmwasser-Heizungssystem unterbricht. Sinkt der Wasserdruck in dem Warmwasser-Heizungssystem unter einen zulässigen unteren Wert, wird manuell ein Nachfüllung eingeleitet. Zwischen Trinkwassersystem und Warmwasser-Heizungssystem ist ein Rohrtrenner eingeschaltet. Ein solcher Rohrtrenner verhindert, daß Brauchwasser aus dem Warmwasser-Heizungssystem in das Trinkwassersystem zurückfließen kann. Das muß nämlich mit Sicherheit ausgeschlossen werden. Ein solcher Rohrtrenner enthält ein Paar von in Reihe geschalteten Rückflußverhinderern in Form von Ventilen die nur in Richtung von dem Trinkwassersystem zu dem Warmwasser-Heizungssystem öffnen und in Gegenrichtung sperren. Zwischen diesen Rückflußverhinderem ist ein Ablaßventil vorgesehen. Dieses Ablaßventil wird von dem Druck im Trinkwassersystem oder von der Druckdifferenz zwischen dem Trinkwassersystem und dem Mitteldruck zwischen den Rückflußverhinderem in eine Schließstellung bewegt. Wenn dieser Druck oder diese Druckdifferenz aus irgendeinem Grunde wegfällt, öffnet das Ablaufventil und verbindet den Raum zwischen den Rückflußverhinderern mit einem Ablauf.

Es ist bekannt, den Füllvorgang dadurch zu automatisieren, daß durch einen Drucksensor der Druck z.B. in einem Warmwasser-Heizungssystem gemessen und von diesem Drucksensor ein Magnetventil gesteuert wird.

JP 62237175 offenbart ein Kugelventil mit einem Drucksensor zur Messung des Gasdrucks. Ziel der Anordnung ist es, dass das Kugelventil bei Erdbeben selbstständig schließt. Dieses Ziel wird dadurch erreicht, dass innerhalb des Kugelventils ein Drucksensor angeordnet ist, der den Gesamtdruck und den statischen Gasdruck misst. Über Zuleitungen werden die Drücke auf beide Seiten einer Membran geleitet. Die Membran ist mit einer Spindel verbunden. Über ein Ventil wird mit der Spindel ein Stellglied mit einem Hebel angetrieben, über den das Kugelventil geschlossen werden kann.

US 5960818 offenbart eine Armatur zum Füllen und Nachfüllen eines Warmwasser-Heizungssystems. Die Armatur weist einen stromaufwärtigen und einen stromabwärtigen Rückflussverhinderer auf, die einen Rohrtrenner bilden. Ein Druckminderer dient neben seiner Funktion als Druckminderer auch als Absperrventil um den Zugang zum Rohrtrenner zu ermöglichen.

Der Erfindung liegt die Aufgabe zugrunde, den Füll- oder Nachfüllvorgang bei einer Warmwasser-Heizungsanlage unter weitestgehender Beibehaltung vorhandener Strukturen zu automatisieren. Erfindungsgemäß wird dies bei einer Ventilanordnung der eingangs genannten Art dadurch erreicht, daß
(a) das Absperrventil ein um eine Stellachse verdrehbares Kugelventil ist, das in einer ersten Stellung eine Verbindung zwischen dem Versorgungssystem und dem stromabwärtigen System sowie zwischen dem stomabwärtigen System und dem Drucksensor herstellt, und in einer zweiten Stellung die Verbindung zwischen dem Versorgungssystem und dem stromabwärtigen System unterbricht,
(b) das Kugelventil durch einen Stellmotor aus der ersten in die zweite Stellung verstellbar ist und
(c) der Stellmotor von dem Drucksensor gesteuert ist.
Bei dieser Anordnung wird ein bei solchen Anlagen auch sonst gebräuchliches Kugelventil verwendet. Das Kugelventil ist so ausgebildet, daß es in der normalen Betriebsstellung auch eine Verbindung zwischen dem stromabwärtigen System, z.B. einem Warmwasser-Heizungssystem, und dem Drucksensor herstellt. Dieser Drucksensor steuert einen Stellmotor, durch welchen das Kugelventil bei Erreichen eines vorgegebenen Systemdrucks in eine Schließstellung verdreht wird. Dieses Schließen erfolgt stetig, so daß keine Wasserschläge im System auftreten.

Vorteilhafte Ausgestaltungen der Erfindung sind Gegenstand der Unteransprüche.

Ein Ausführungsbeispiel der Erfindung ist nachstehend unter Bezugnahms auf die zugehörigen Zeichnungen näher erläutert.
- Fig.1: zeigt eine Ventilanordnung nach der Erfindung in Verbindung mit einer Fülleinrichtung für ein Warmwasser-Heizungssystem, wobei die Fülleinrichtung einen Rohrtrenner und einen Druckminderer aufweist.
- Fig.2: zeigt einen Längsschnitt eines Kugelventils bei der Ventilanordnung von Fig. 1 in einer ersten Ventilstellung.
- Fig.3: zeigt einen Längsschnitt durch das Kugelventil längs der Ebene A - A von Fig.2 senkrecht zur Papierebene von Fig.2 geschnitten.
- Fig.4: zeigt einen Längsschnitt des Kugelventils von Fig.2 in einer zweiten Ventilstellung.
- Fig.5: zeigt einen Längsschnitt des Kugelventils längs der Ebene B - B von Fig.4 senkrecht zur Papierebene von Fig.4 geschnitten.
- Fig.6: zeigt einen Längsschnitt des Kugelventils von Fig.2 und 4 in einer dritten Ventilstellung.
- Fig.7: zeigt einen Längsschnitt des Kugelventils längs der Ebene A - A von Fig.6 senkrecht zur Papierebene von Fig.6 geschnitten.

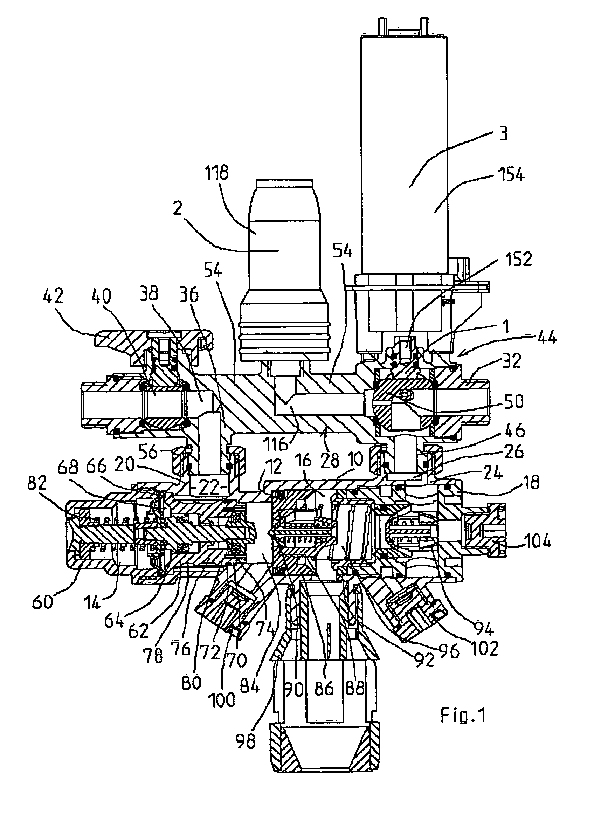

In Fig.1 ist mit 10 ein Armaturengehäuse von zylindrischer Grundform bezeichnet. Wie aus Fig.1 ersichtlich ist, ist das Armaturengehäuse hülsenförmig und bildet eine Schulter 12. In das Armaturengehäuse 10 ist von links in Fig.1 her ein Druckminderer 14 eingeschraubt. Der Druckminderer schließt die Bohrung des Armaturengehäuses links in Fig.1 ab. Der Druckminderer ist als zusammenhängender, patronenartig aus dem Armaturengehäuse 10 herausschraubbarer Bauteil ausgebildet. Vor rechts in Fig.1 ist in das Armaturengehäuse ein Rohrtrenner eingesetzt, der generell mit 16 bezeichnet ist. Der Rohrtrenner 16 weist einen Trägerteil 18 auf, der die Bohrung des Armaturengehäuses rechts in Fig.1 abschließt.

Das Armaturengehäuse 10 weist einen einlaßseitigen Anschlußstutzen 20 auf, der einen Einlaßanschluß 22 bildet, und einen auslaßseitigen Anschlußstutzen 24, der einen Auslaßanschluß 26 bildet. Die Anschlußstutzen 20 und 24 sind seitlich an dem Armaturengehäuse 10 in der Nähe von dessen einlaßseitigem bzw. auslaßseitigem Ende angeordnet. Sie sind zueinander parallel und sitzen auf der gleichen Seite des Armaturengehäuses. Das zylindrische Armaturengehäuse 10 definiert eine Längsachse. Die Achsen der Anschlußstutzen 20 und 24 verlaufen senkrecht zu dieser Längsachse und liegen in einer Ebene, der Papierebene von Fig.1.

Das Armaturengehäuse mit Druckminderer 14 und Rohrtrenner 16 ist mittels eines Anschlußstücks 28 in eine (nicht dargestellte) Rohrleitung eingebaut. Das Anschlußstück 28 weist einen Einlaßstutzen 30 und einen damit fluchtenden Auslaßstutzen 32 auf. Der Einlaßstutzen 30 sitzt in einem einlaßseitigen Endteil 34 des Anschlußstücks 28. An dem Endteil sitzt ein Anschlußstutzen 36, dessen Achse senkrecht zur Achse der Rohrleitung und der Einlaß- und Auslaßstutzen verläuft. Der Einlaßstutzen 30, das Endteil 34 und der Anschlußstutzen 36 bilden einen L-förmigen Einlaßkanal 38. In dem Einlaßkanal sitzt stromab oder auslaßseitig von dem Einlaßstutzen 30 ein Absperrventil 40 in Form eines Kugelventils, das mittels eines Handgriffs 42 betätigbar ist. Der Auslaßstutzen 32 sitzt in einem auslaßseitigen Endteil 44 des Anschlußstücks 28. An dem auslaßseitigen Endteil 44 sitzt ein Anschlußstutzen 46, dessen Achse ebenfalls senkrecht zur Achse der Rohrleitung und der Einlaß- und Auslaßstutzen und parallel zur Achse des Anschlußstutzens 36 verläuft. Das auslaßseitige Endteil 44 bildet das Ventilgehäuse eines als Kugelventil ausgebildeten Absperrventils 50. Die einlaß- und auslaßseitigen Endteile 34 bzw. 44 mit den Einlaß- bzw Auslaßstutzen 30 bzw. 32 sind durch ein integrales Abstandsstück 54 in definierter Lage miteinander verbunden. Dieses Abstandsstück legt nur die gegenseitige Lage der Endteile 34 und 44 fest. Der Abstand der Anschlußstutzen 36 und 46 des Anschlußstücks 28 ist gleich dem Abstand der Anschlußstutzen 20 und 26 des Armaturengehäuses 10. Das Armaturengehäuse 10 kann daher mit seinen Anschlußstutzen 20 und 24 an die Anschlußstutzen 36 bzw. 46 des Anschlußstücks 26 angeschlossen werden. Das geschieht mittel Exzenterverschraubungen 56 bzw. 58, wie sie in der DE 298 19 933.5 U beschrieben sind. Die Anschlußstutzen 36 und 46 sind gleich lang, so daß ihre Enden in einer Ebene liegen. Ebenso liegen die Enden der Anschlußstutzen 20 und 24 in einer Ebene. Im montierten Zustand verläuft daher, wie aus Fig.1 ersichtlich ist, die Längsachse des Armaturengehäuses 10 im Abstand parallel zu der Achse der Rohrleitung und der Einlaß- und Auslaßstutzen 30 bzw. 32 des Anschlußstücks 28.

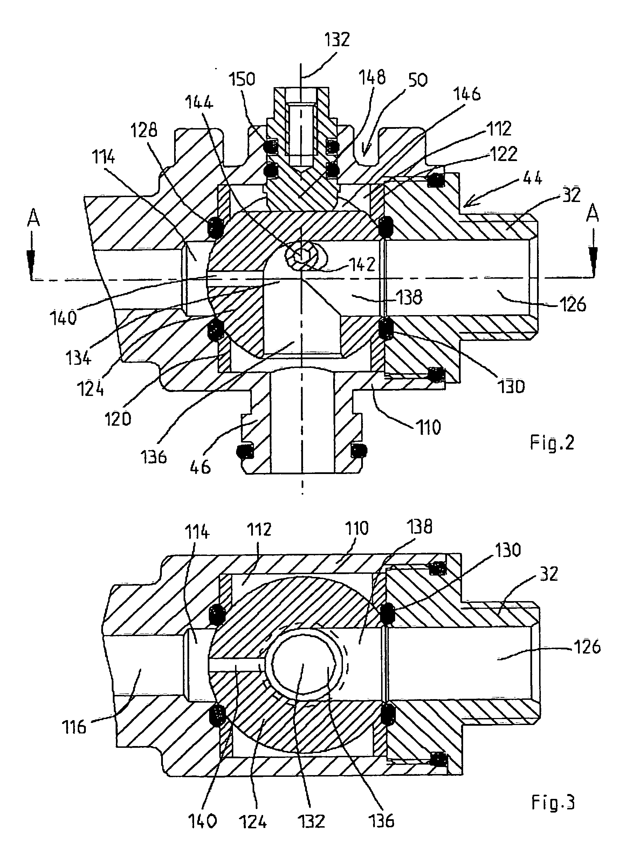

Dadurch ist eine leichte Montage und Demontage des Armaturengehäuses möglich. Die Anordnung und insbesondere das Armaturengehäuse 10 ist einfach und raumsparend. Das Armaturengehäuse 10 kann nach Absperren der Absperrventile 40 und 50 leicht ausgebaut, ausgetauscht oder geöffnet werden. Der Druckminderer 14 ist von einer Seite und der Rohrtrenner 16 von der anderen Seite des Armaturengehäuses her zugänglich. Das Armaturengehäuse 10 kann wahlweise in der dargestellten oder in einer um 180° um die vertikale Achse in Fig.2 winkelversetzt eingebaut werden und damit der Strömungsrichtung in der Rohrleitung angepaßt werden.

Der Druckminderer 14 und der Rohrtrenner sind im wesentlichen in bekannter Weise aufgebaut und daher nur kurz beschrieben.

Der Druckminderer 14 ist als zusammenhängende Baugruppe ausgebildet, die patronenartig in das in Fig.1 linke, offene Ende des hülsenartigen Armaturengehäuses 10 eingeschraubt ist. Der Druckminderer 14 weist ein kappenartiges Oberteil 60 und ein Unterteil 62 auf. Das Unterteil 62 bildet einen schalenförmigen Teil 64. Zwischen dem Teil 64 und dem Oberteil 60 ist eine Membran 66 eingespannt. Zwischen dem schalenförmigen Teil 64 und der Membran 66 ist eine Druckkammer 68 gebildet. Das Unterteil weist weiterhin einen hülsenförmigen Ventilsitzkörper 70 auf. Der Ventilsitzkörper 70 ist mittels eines Dichtringes 72 abdichtend in dem Armaturengehäuse geführt. Der Ventilsitzkörper 70 bildet einen Ventilsitz 74 des Regelventils. Der Ventilsitzkörper 70 ist durch Stege 76 mit dem schalenförmigen Teil 74 verbunden. In den Stegen 76 verlaufen Kanäle 78, welche den geregelten Druck auf die Druckkammer 68 überträgt. Mit der Membran 66 ist über einen Stößel mit einem Ventilteller 80 verbunden. In dem kappenartigen Oberteil 60 sitzt eine Schraubenfeder 82. Die Schraubenfeder 82 belastet die Membran von links in Fig.1 und stützt sich an der Stirnfläche der Kappe 60 ab.

An der Membran 66 wirkt der Druck in der Kammer 84 stromab von dem Druckminderer 14 der Vorspannung der Schraubenfeder 82 entgegen Bei Anstieg des Druckes in der Kammer 84 über den Sollwert bewegt die Membran den Ventilteller nach links in Fig.2 und drosselt den Wasserdurchfluß, so daß der Druck in der Kammer 84 sinkt. Bei Überschreiten eines bestimmten Druckes in der Kammer 84 schließt das Regelventil vollständig, und zwar unabhängig vom Einlaßdruck. Das gibt eine zusätzliche Sicherheit gegen den Rückfluß von Flüssigkeit, z.B. von Brauchwasser, vom Auslaß 26 zum Einlaß 22.

Der Rohrtrenner 16 weist einen hülsenförmigen Ventilkörper 86 auf. Der Ventilkörper 86 ist in der Bohrung des Armaturengehäuses 10 geführt und liegt in der Ruhestellung an der Schulter 12 an. In dem Ventilkörper 86 sitzt ein erster, stromaufwärtiger Rückflußverhinderer 88, dessen Schließkörper mit einem Ventilsitz 90 des Ventilkörpers 86 zusammenwirkt und der zur Auslaßseite hin öffnet.. Ein Trägerteil 18 sitzt abgedichtet in dem rechten, offenen Ende des Armaturengehäuses 10 und schließt dessen Innenraum am rechten Ende in Fig.1 ab. Das Trägerteil 18 bildet einen Ventilsitz 92 in Form eines Dichtringes. Mit diesem Ventilsitz wirkt der Ventilkörper 86 zusammen. Der Ventilkörper 86 steht unter dem Einfluß einer Druckfeder, welche sich an dem Trägerteil 18 abstützt und den Ventilkörper in der Ruhestellung in Anlage an der Schulter 12 hält. In dem Trägerteil 18 sitzt ein zweiter, stromabwärtiger Rückflußverhinderer 94, der mit einem im Trägerteil 18 sitzenden Ventilsitz zusammenwirkt und ebenfalls zur Auslaßseite hin öffnet. Der Raum 96 zwischen den Rückflußverhinderern 88 und 94 ist mit einem Ablauf 98 verbunden.

Im Ruhezustand ist das von dem Ventilkörper 86 und dem Ventilsitz 92 gebildete Entlastungsventil offen. Dann kann auch bei einem Defekt des stromabwärtigen Rückflußverhinderers 94 kein Brauchwasser o. dergl. in das einlaßseitige System, z.B. Leitungswassersystem, gelangen. Solches Brauchwasser würde über den Ablauf 98 abfließen. Wenn am Einlaß 22 ein hinreichend großer Druck auftritt, wird der Ventilkörper 86 von diesem Druck gegen die Wirkung der Feder nach rechts in Fig.2 in seine Schließstellung bewegt und legt sich an den Ventilsitz 92 an. Das Entlastungsventil ist dann geschlossen. Bei weiterem Druckanstieg öffnen die Rückflußverhinderer 88 und 94, so daß eine Flüssigkeitsströmung vom Einlaß 22 zum Auslaß 26 stattfinden kann.

Ein verschließbarer Prüfanschluß 100 ist mit dem Raum zwischen dem Druckminderer 14 und dem Rohrtrenner 16 verbunden. Ein weiterer verschließbarer Prüfanschluß 102 steht mit dem Mitteldruckraum zwischen den Rückflußverhinderern 88 und 94 in Verbindung. Die beiden Prüfanschlüsse 100 und 102 sind an dem Armaturengehäuse 10 unter einem Winkel beiderseits des Ablaufs 98 vorgesehen. Ein dritter Prüfanschluß 104 steht mit dem Auslaß 26 in Verbindung. Dieser Prüfanschluß 104 sitzt an der Stirnseite des Trägerteils 18.

Das Absperrventil 50 ist in den Figuren 2 bis 7 in verschiedenen Ventilstellungen in vergrößertem Maßstab dargestellt.

In Fig.2 und 3 ist das Absperrventil 50 in einer ersten Ventilstellung dargestellt, in welcher die Verbindung zwischen dem Armaturengehäuse 10 und dem Auslaß hergestellt ist. Das auslaßseitige Endteil 44 des Abstandsstücks 54 bildet ein Ventilgehäuse 110 mit einem zylindrischen Innenraum 112. Die Zylinderachse des zylindrischen Innenraums 112 fällt mit der Achse des Auslaßstutzens 32 zusammen. Auf der dem Auslaßstutzen 32 gegenüberliegenden Seite und gleichachsig mit dem Auslaßstutzen 32 geht ein Drucksensor-Anschluß 114 ab. Der Drucksensor-Anschluß 114 steht über einen Kanal 116 in dem Abstandsstück 54 mit einem Drucksensor 118 in Verbindung. Der Drucksensor 118 ist auf dem Abstandsstück 54 montiert. Vor den Stirnflächen des zylindrischen Innenraumes 112 des Ventilgehäuses 110 sitzen Ringscheiben 120 und 122 mit sphärischen Innenrändem, deren zentrale Durchbrüche mit dem Drucksensor-Anschluß 114 bzw. dem Auslaßstutzen fluchten. Zwischen den beiden Ringscheiben 120 und 122 sitzt eine Ventilkugel 124 des Absperrventils 50. Um den Drucksensor-Anschluß 124 und den Auslaßkanal 126 des Auslaßstutzens 32 herum sitzen Dichtringe 128 und 130. Die Dichtringe 128 und 130 sind zwischen dem Ventilgehäuse 110, den Ringscheiben 120 bzw. 122 und der Ventilkugel 124 gehalten. Die Ventilkugel 124 ist zwischen den Dichtringen 128 und 130 gelagert. Die Ventilkugel 124 ist um eine Stellachse 132 drehbar.

Die Ventilkugel 124 weist einen rechtwinklig abgewinkelten Durchgangskanal 134 auf. Ein erster Schenkel 136 des Durchgangskanals 134 verläuft gleichachsig zu der Stellachse 132. Ein zweiter Schenkel 138 des Durchgangskanals 134 verläuft senkrecht zu der Stellachse 132. In der in Fig.2 und 3 dargestellten Ventilstellung ist der zweite Schenkel 138 gleichachsig zu dem Auslaßkanal 126 des Auslaßstutzens 32. In dieser ersten Ventilstellung stellt der Durchgangskanal 134 eine Verbindung zwischen dem Anschlußstutzen 46 und damit dem auslaßseitigen Anschlußstutzen 24 des Armaturengehäuses 10 her.

Gleichachsig zu dem Auslaßkanal 126 ist in der Ventilkugel zur gegenüberliegenden Seite hin ein Drucksensor-Kanal 140 vorgesehen, welcher praktisch eine rückwärtige Verlängerung des zweiten Schenkels 138 bildet. Über diesen Drucksensor-Kanal 140 ist in Fig.2 und 3 der Durchgangskanal 134 mit dem Drucksensor-Anschluß 114 verbunden. Über diesen Drucksensor-Kanal 140, den Drucksensor-Anschluß 114 und den Kanal 116 ist daher der Drucksensor 118 vom Druck in dem stromabwärtigen System der Warmwasser-Heizungsanlage beaufschlagt.

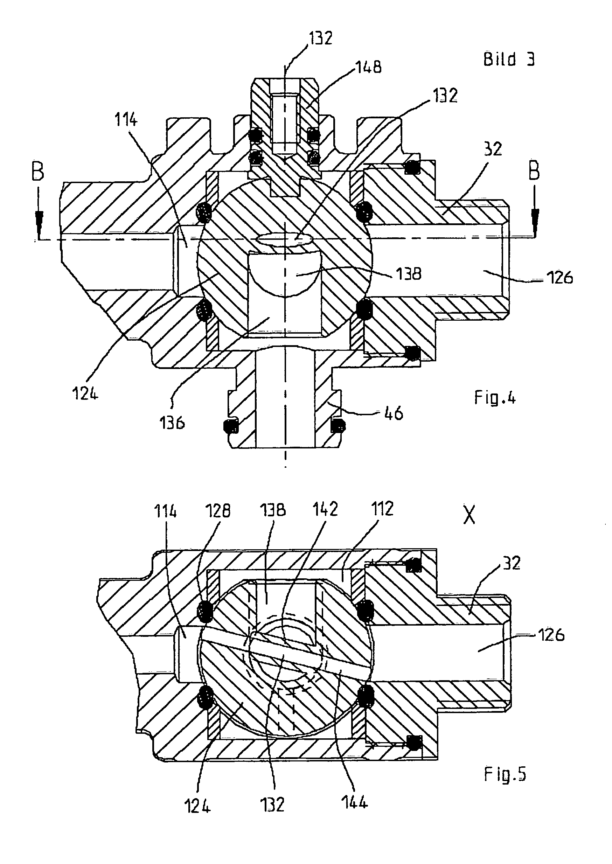

Der Durchgangskanal 134 ist von einem Steg 142 durchsetzt. Dieser Steg 142 verläuft durch die Stellachse 132 und außermittig zu dem Schenkel 138 des Durchgangskanals 134. Wie aus Fig. 5 am besten ersichtlich ist, verläuft der Steg 142 unter einem nicht-rechten Winkel zu der von der Stellachse 132 und der gemeinsamen Achse des zweiten Schenkels 138 und des Drucksensor-Kanals 140 aufgespannten Ebene. Durch den Steg 142 verläuft eine die gesamte Ventilkugel Bohrung 144.

Die Ventilkugel 124 weist einen Mitnahmeschlitz 146 auf. Der Mitnahmeschlitz 146 ist symmetrisch zu einer die Stellachse 132 enthaltenden Ebene und erstreckt sich im wesentlichen senkrecht zu der Stellachse 132. In den Mitnahmeschlitz 146 greift ein Mitnehmer 148. Der Mitnehmer 148 ist über Dichtringe 150 um die Stellachse 132 drehbar im Ventilgehäuse 110 gelagert. Der Mitnehmer 148 sitzt auf der Welle 152 eines Stellmotors 154, der auf dem Abstandsstück 54 montiert ist. Der Stellmotor 154 ist von dem Drucksensor 118 über eine (nicht dargestellte) Steuerelektronik steuerbar.

Fig.4 und 5 zeigen das Absperrventil in seiner zweiten Ventilstellung, in welcher der Durchgang von dem Armaturengehäuse 10 zu dem Auslaßstutzen 32 abgesperrt ist. In dieser Ventilstellung ist die Ventilkugel 124 durch den Stellmotor 154 aus der Position von Fig.2 und 3 um 90° entgegen dem Uhrzeigersinn in Fig.3 verdreht. Der Innenraum 112 des Ventilgehäuses 110 ist zwar über den Durchgangskanal 134 weiterhin mit dem Anschlußstutzen 46 und damit mit dem Ausgang des Armaturengehäuses 10 verbunden. Die Verbindung zum Ausgangskanal 126 ist aber durch die Mantelfläche der Ventilkugel 124 und den daran anliegenden Dichtring 130 unterbrochen. Auch der Drucksensor-Kanal 140 ist durch die Ventilkugel 124 und den Dichtring 128 von dem Drucksensor-Anschluß 114 getrennt. Wie aus Fig.5 am besten ersichtlich ist, ist jedoch über die schräg verlaufende Bohrung 132 eine Verbindung zwischen dem Auslaßkanal 126 und dem Drucksensor-Anschluß 114 hergestellt. Die Bohrung geht von vom in Fig.4 bzw. unten in Fig.5 im Ausgangskanal 126 nach hinten in Fig.4 bzw. oben in Fig.5 im Drucksensor-Anschluß 114, so daß gerade noch eine Verbindung zu dem Auslaßkanal 126 einerseits und dem Drucksensor-Anschluß andererseits hergestellt ist. Trotz der Absperrung des Durchgangs zum Auslaßkanal 126 ist daher der Drucksensor 118 weiterhin vom Druck in dem stromabwärtigen System der Warmwasser-Heizungsanlage beaufschlagt.

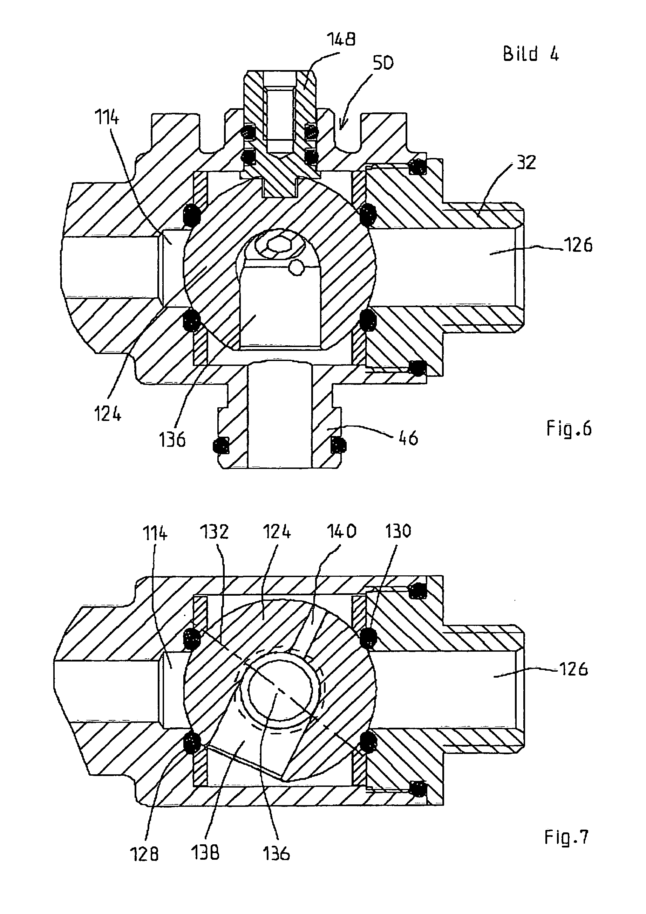

In Fig.6 und 7 ist eine dritte Ventilstellung dargestellt. In dieser Ventilstellung ist die Ventilkugel 124 gegenüber der zweiten Ventilstellung um mehr als 180° im Uhrzeigersinn von Fig.5 und 7 um die Stellachse 136 verdreht. In dieser Stellung sind der Schenkel 138 des Durchgangskanals 134 und der Drucksensor-Kanal 140 weiterhin mit dem Innenraum 112 des Ventilgehäuses 110 verbunden durch die Oberfläche der Ventilkugel 124 und die Dichtringe 128 und 130 von dem Drucksensor-Anschluß 114 und dem Auslaßkanal 126 getrennt. In dieser Position der Ventilkugel ist aber auch die (gestrichelt in Fig.7 angedeutete) durchgehende Bohrung 132 so orientiert, daß sie an beiden Enden außerhalb der Dichtringe 128 und 130 mündet.

In dieser dritten Ventilstellung ist daher nicht nur der Durchgang zum Auslaßstutzen 132 abgesperrt sondern auch die Verbindung zwischen Ausgangskanal 126 und Drucksensor-Anschluß 114 unterbrochen.

Die beschriebene Ventilanordnung arbeitet wie folgt:

In der ersten Ventilstellung ist der Durchgang zum Auslaßstutzen 32 und zu der stromabwärtigen Warmwasser-Heizungsanlage offen. In dieser Ventilstellung kann die Warmwasser-Heizungsanlage gefüllt oder nachgefüllt werden. Wenn der Druck in der Warmwasser-Heizungsanlage einen vorgegebenen Wert erreicht hat, wird durch den Drucksensor 118, welcher über den Drucksensor-Kanal 140 vom Systemdruck beaufschlagt ist, der Stellmotor 154 angesteuert. Der Stellmotor 154 dreht die Ventilkugel 124 in die zweite Ventilstellung. In dieser Stellung ist die Verbindung zwischen dem Versorgungssystem über den Rohrtrenner zum Warmwasser-Heizungssystem unterbrochen. Der Füll- oder Nachfüllvorgang ist beendet. Über die Bohrung 132 ist der Drucksensor 118 jedoch weiterhin vom Systemdruck des Warmwasser-Heizungssystems beaufschlagt. Bei Absinken des Systemdrucks unter einen vorgegebenen Wert, wird die Ventilkugel 124 durch den Stellmotor wieder in die erste Ventilstellung zurückgedreht und automatisch ein neuer Nachfüllvorgang eingeleitet. In der Dritten Ventilstellung sind alle Verbindungen unterbrochen. In dieser Ventilstellung können Wartungsarbeiten z.B. auch an dem Drucksensor durchgeführt werden.

## Patentansprüche

1. Ventilanordnung für eine Flüssigkeit mit einem Absperrventil (50), welches den Durchgang von einem Trinkwasser-Versorgungssystem zu einem stromab von dem Absperrventil (50) angeschlossenen Warmwasser-Heizungssystem beherrscht und mit einem Drucksensor (118), mittels welchem das Absperrventil (50) vom Druck dieses stromabwärtigen Systems gesteuert ist,
wobei
(a) das Absperrventil (50) ein um eine Stellachse (132) verdrehbares Kugelventil ist, das in einer ersten Stellung eine Verbindung zwischen dem Versorgungssystem und dem stromabwärtigen System sowie zwischen dem stomabwärtigen System und dem Drucksensor (118) herstellt, und in einer zweiten Stellung die Verbindung zwischen dem Versorgungssystem und dem stromabwärtigen System unterbricht,
(b) das Kugelventil durch einen Stellmotor (154) aus der ersten in die zweite Stellung verstellbar ist,
(c) der Stellmotor (154) von dem Drucksensor (118) gesteuert ist, und
**dadurch gekennzeichnet, daß** die Ventilanordnung derart ausgebildet ist, daß
(d) das Kugelventil auch in seiner zweiten Stellung eine Verbindung zwischen stromabwärtigem System und dem Drucksensor (118) herstellt.

2. Ventilanordnung nach Anspruch 1, **dadurch gekennzeichnet, daß** das Kugelventil in eine dritte Stellung verdrehbar ist, in welcher die Verbindung des stromabwärtigen Systems sowohl zu dem Versorgungssystem als auch zu dem Drucksensor (118) unterbrochen ist.

3. Ventilanordnung nach Anspruch 1, **dadurch gekennzeichnet, daß**
(a) die Ventilkugel (124) des Kugelventils um die Stellachse (132) drehbar in einem Ventilgehäuse (110) gelagert ist, welches einen Einlaß (46) gleichachsig zu der Stellachse (132), einen Auslaß (32) senkrecht zu der Stellachse (132) und einen mit dem Drucksensor (118) verbundenen Drucksensor-Anschluß (114) diametral gegenüber dem Auslaß (32) aufweist,
(b) die Ventilkugel (124) des Kugelventils einen rechtwinklig abgewinkelten Durchgangskanal (134) aufweist, dessen erster Schenkel (136) gleichachsig zu der Stellachse (132) und dessen zweiter Schenkel (138) senkrecht zu der Stellachse (132) verläuft und in der ersten Stellung mit dem Auslaß (32) fluchtet, und
(c) die Ventilkugel (124) weiterhin einen mit dem Drucksensor-Anschluß (114) verbundenen Drucksensor-Kanal (140) geringeren Durchmessers in rückwärtiger Verlängerung des zweiten Schenkels (138) bildet.

4. Ventilanordnung nach Anspruch 3, **dadurch gekennzeichnet, daß** in der zweiten Stellung des Kugelventils die Ventilkugel (124) gegenüber der ersten Stellung um 90° in einer ersten Richtung um die Stellachse (132) verdreht ist, wobei der Auslaß (32) abgedeckt und der zweite Schenkel (138) des Durchgangskanals (134) im Ventilgehäuse (110) abgeschlossen ist.

5. Ventilanordnung nach den vorgehenden Ansprüchen, **dadurch gekennzeichnet, daß** sich durch den ersten Schenkel (136) des Durchgangskanals (134) senkrecht zur Stellachse (132) ein Steg (142) erstreckt, durch welchen hindurch eine die Ventilkugel (124) durchsetzende Bohrung (144) verläuft, die auch in der zweiten Stellung des Kugelventils eine Verbindung zwischen Auslaß (32) und Drucksensor-Anschluß (114) herstellt.

6. Ventilanordnung nach Anspruch 5, **dadurch gekennzeichnet, daß** die Achse des Stegs (142) und der Bohrung (144) mit der von der Achse des zweiten Schenkels (138) und er Stellachse (132) aufgespannten Ebene einen nicht-rechten Winkel bildet.

7. Ventilanordnung nach Anspruch 6, **dadurch gekennzeichnet, daß** der Steg (142) außermittig zu dem zweiten Schenkel (138) des Durchgangskanals (134) auf der dem ersten Schenkel (136) abgewandten Seite verläuft.

8. Ventilanordnung nach den Ansprüchen 2 und 7, **dadurch gekennzeichnet, daß** in der dritten Stellung des Kugelventils die Ventilkugel (124) gegenüber der zweiten Stellung um mehr als 180° in einer der ersten Richtung entgegengesetzten Richtung verdreht ist, derart daß sowohl der Auslaß als auch der Drucksensor-Anschluß (114) abgeschlossen sind und der Drucksensor-Kanal (140) geringeren Durchmessers ebenso wie die den Steg (142) durchsetzende Bohrung (144) vom Ventilgehäuse (110) abgeschlossen sind.

9. Ventilanordnung nach einem der Ansprüche 3 bis 8, **dadurch gekennzeichnet, daß**
(a) das Ventilgehäuse (110) einen zylindrischen Innenraum (112) gleichachsig zu den Achsen von Auslaß und Drucksensor-Anschluß (114) aufweist, in welchem gegenüberliegend um Auslaß und Drucksensor-Anschluß (114) herum Ringscheiben (120,122) sitzen,
(b) die Ventilkugel (124) zwischen diesen Ringscheiben (120,122) sitzt, und
(c) zwischen Ringscheiben (120,122), Ventilgehäuse (110) und Ventilkugel (124) um Auslaß (126) und Drucksensor-Anschluß (114) herum Dichtringe (128,130) koaxial zu der Achse von Auslaß und Drucksensor-Anschluß gehalten sind, in denen die Ventilkugel (124) drehbar ist.

10. Ventilanordnung nach einem der Ansprüche 1 bis 9, **dadurch gekennzeichnet, daß** das Kugelventil zwischen dem Auslaß (26) des Armaturengehäuses (10) eines mit dem Versorgungssystem verbundenen Rohrtrenners (16) und dem System stromab von dem Rohrtrenner (16) angeordnet ist.

11. Ventilanordnung nach Anspruch 10, **dadurch gekennzeichnet, daß** Drucksensor (118) und Stellmotor (154) auf einem Anschlußstück (28) sitzen, das in eine Rohrleitung zwischen Versorgungssystem und stromabwärtigem System eingebaut ist und an welches das Armaturengehäuse (10) des Rohrtrenners (16) seitlich angeschlossen ist, wobei das Ventilgehäuse (110) Teil dieses Anschlußstücks (28) bildet.

## Claims

1. Valve assembly for a liquid with a shut-off valve (50), the shut-off valve controlling the passage between a drinking water supply system and hot water heating system installed on the downstream side of the shut-off valve and with a pressure sensor (118) which is used to control the shut-off valve (50) depending on the pressure of such a downstream system, wherein
(a) the shut-off valve (50) is a ball valve which is rotatable around an adjusting axis, the ball valve being designed in such a way that in a first position a passage is established between the supply system and the downstream system as well as between the downstream system and the pressure sensor (118), and in a second position the passage between the supply system and the downstream system is interrupted,
(b) the ball valve is adapted to be switched by a servo motor (154) from the first into the second position,
(c) the servo-motor (154) is controlled by the pressure sensor (118), and
**characterized in that**
(d) the valve assembly is designed in such a way that the ball valve also establishes a passage between the downstream system and the pressure sensor (118) in its second position.

2. Valve assembly according to claim 1, **characterized in that** the ball valve is rotatable to a third position where the passage between the downstream system and the supply system is interrupted as well as to the pressure sensor (118).

3. Valve assembly according to claim 1, **characterized in that**
(a) the valve ball (124) of the ball valve is positioned in a valve housing (110) rotatably around an axis (132), the housing being provided with an inlet (46) which is in line with the axis (132), an outlet (32) which is perpendicular to the axis (132) and a pressure sensor-socket (114) connected to the pressure sensor (118) on the opposite side of the outlet (32),
(b) the valve ball (124) of the ball valve is provided with a perpendicular angled connecting passage (134), the first branch (136) thereof extending in alignment with the axis (132) and the second branch (138) thereof extending perpendicular to the axis (132) and being aligned with the outlet (32), and
(c) the valve ball (124) furthermore forms a pressure sensor passage (140) connected to the pressure sensor socket (114) the pressure sensor passage having a smaller diameter in the backside extension of the second branch (138).

4. Valve assembly according to claim 3, **characterized in that** in the second position the valve ball (124) is angular off-set by 90° in a first direction about the axis (132) against the first position, whereby the outlet (32) is covered and the second branch (138) of the passage (134) in the valve housing (110) is closed.

5. Valve assembly according to the preceeding claims, **characterized in that** a web extends through the first branch (136) of the passage (134) perpendicular to the axis (132), the web having a bore (144) running through the valve ball (124), the bore connectiong the outlet (32) to the pressure sensor socket (114) also in the second position of the ball valve.

6. Valve assembly according to claim 5, **characterized in that** the axis of the web (142) and the bore (144) forms a non-perpendicular angle with the plane defined by the axis of the second branch (138) and the axis (132).

7. Valve assembly according to claim 6, **characterized in that** the web extends excentric to the second branch (138) of the passage (134) on the side remote to the first branch (136).

8. Valve assembly according to claims 2 to 7, **characterized in that** in a third position of the ball valve the valve ball (124) is angular off-set by mor than 180° in a direction opposite to the first direction in such a way that the outlet is closed as well as the pressure sensor socket (114) and the pressure sensor passage (140) having a smaller diameter is closed by the valve housing (110) like the bore (144) extending through the web (142).

9. Valve assembly according to any of claims 3 to 8, **characterized in that**
(a) the valve housing (110) is provided with a cylindrical inner space (112) in alignment with the axes of the outlet and the pressure sensor socket (114) wherein annular discs (120, 122) are arranged on opposite sides around the outlet and the pressure sensor socket (114),
(b) the valve ball (124) is arranged between such annular discs (120, 122), and
(c) sealing rings (128, 130) are held coaxially to the axis of the outlet and the pressure sensor socket between the annular discs (129, 122) the valve housing (110) and the valve ball (124), which are adapted to have the valve ball (124) rotating therein.

10. Valve assembly according to any of claims 1 to 9, **characterized in that** the ball valve is arranged between the outlet (26) of the housing of the fitting (10) of a pipe disconnector (16) connected to the supply system and the system downstream of the pipe disconnector (16).

11. Valve assembly according to claim 10, **characterized in that** the pressure sensor (118) and the servo-motor (154) is arranged on a connecting portion (28) which is installed in a pipe between the supply system and the downstream system and to the side of which the housing of the fitting (10) of the pipe disconnector (16) is connected, whereby the valve housing (110) is a portion of this connecting portion (28).

## Revendications

1. Disposition de vanne pour liquide munie d'une vanne d'arrêt (50) qui règle le passage d'un système d'alimentation en eau potable vers un système de chauffage à l'eau chaude raccordé en aval de la vanne d'arrêt (50) et munie d'un capteur de pression (118) permettant de commander la vanne d'arrêt (50) par la pression de ce système aval,
(a) la vanne d'arrêt (50) étant une vanne à boisseau sphérique pouvant tourner autour d'un axe de commande (132) qui établit, dans une première position, une connexion entre le système d'alimentation et le système aval ainsi qu'entre le système aval et le capteur de pression (118), et interrompt, dans une seconde position la connexion entre le système d'alimentation et le système aval,
(b) la vanne à boisseau sphérique peut être commandée par un servomoteur (154) pour passer de la première à la seconde position,
(c) le servomoteur (154) est commandé par le capteur de pression (118), et
**caractérisée en ce que** la disposition de vanne est configurée de sorte que
(d) la vanne à boisseau sphérique établit également dans sa seconde position une connexion entre le système aval et le capteur de pression (118).

2. Disposition de vanne selon la revendication 1, **caractérisée en ce que** la vanne à boisseau sphérique peut tourner dans une troisième position interrompant la connexion du système aval autant vers le système d'alimentation que vers le capteur de pression (118).

3. Disposition de vanne selon la revendication 1, **caractérisée en ce que**
(a) le boisseau de vanne (124) de la vanne à boisseau sphérique est logé autour de l'axe de commande (132) de façon à pouvoir tourner dans un boîtier de vanne (110) qui présente une admission (46) située sur le même axe que l'axe de commande (132), une sortie (32) située perpendiculairement à l'axe de commande (132) et un raccord pour capteur de pression (114) relié au capteur de pression (118) situé diamétralement par rapport à la sortie (32),
(b) le boisseau de vanne (124) de la vanne à boisseau sphérique présente un canal de passage (134) coudé en équerre dont le premier côté (136) est sur le même axe que l'axe de commande (132) et dont le second côté (138) est perpendiculaire à l'axe de commande (132) et est aligné, dans la première position, sur la sortie (32), et
(c) le boisseau de vanne (124) forme en outre un canal de passage (140) relié au raccord de capteur de pression (114) de diamètre moindre dans le prolongement arrière du second côté (138).

4. Disposition de vanne selon la revendication 3, **caractérisée en ce que**, dans la seconde position de la vanne à boisseau sphérique, le boisseau sphérique (124) est tourné de 90° par rapport à la première position dans un premier sens autour de l'axe de commande (132), la sortie (32) étant recouverte et le second côté (138) du canal de passage (134) étant fermé par le boîtier de vanne (110).

5. Disposition de vanne d'après les revendications précédentes, **caractérisée en ce qu'**une traverse (142) traversée par un perçage (144) contenant le boisseau sphérique (124) et établissant également en seconde position de la vanne à boisseau sphérique entre la sortie (32) et le raccord de capteur de pression (114) traverse le premier côté (136) du canal de passage (134) perpendiculairement à l'axe de commande (132).

6. Disposition de vanne selon la revendication 5, **caractérisée en ce que** l'axe de la traverse (142) et du perçage (144) forment, avec le plan délimité par l'axe du second côté (138) et l'axe de commande (132), un angle qui n'est pas droit.

7. Disposition de vanne selon la revendication 6, **caractérisée en ce que** la traverse (142) est excentrique par rapport au second côté (138) du canal de passage (134) du côté opposé au premier côté (136).

8. Disposition de vanne selon les revendications 2 et 7, **caractérisée en ce que**, en troisième position de la vanne à boisseau sphérique, le boisseau sphérique (124) est tourné par rapport à la seconde position de plus de 180° dans un sens opposé au premier sens de sorte qu'autant la sortie que le raccord pour capteur de pression (114) sont fermés et le canal pour capteur de pression (140) de diamètre moindre ainsi que le perçage (144) contenant la traverse (142) sont fermés par le boîtier de vanne (110).

9. Disposition de vanne selon l'une quelconque des revendications 3 à 8, **caractérisée en ce que**
(a) le boîtier de vanne (110) présente un espace intérieur cylindrique (112) situé sur le même axe que la sortie et le raccord pour capteur de pression (114) dans lequel se trouvent des disques annulaires (120, 122) disposés tout autour de la sortie et du raccord pour capteur de pression (114) en étant opposés les uns aux autres,
(b) le boisseau sphérique (124) se trouve entre ces disques annulaires (120, 122), et
(c) des bagues d'étanchéité (128, 130) dans lesquelles le boisseau sphérique (124) peut tourner sont maintenues autour de la sortie (126) et du raccord pour capteur de pression (114) entre les disques annulaires (120, 122), le boîtier de vanne (110) et le boisseau sphérique (124) en étant coaxiales à l'axe de la sortie et du raccord pour capteur de pression.

10. Disposition de vanne selon l'une quelconque des revendications 1 à 9, **caractérisée en ce que** la vanne à boisseau sphérique est disposée entre la sortie (26) du boîtier de robinetterie (10) d'un disconnecteur hydraulique (16) relié au système d'alimentation et entre le système situé en aval du disconnecteur hydraulique (16).

11. Disposition de vanne selon la revendication 10, **caractérisée en ce que** le capteur de pression (118) et le servomoteur (154) se trouvent sur une pièce de raccordement (28) qui est insérée dans une conduite hydraulique entre le système d'alimentation et le système aval et à laquelle est raccordé latéralement le boîtier de robinetterie (10) du disconnecteur hydraulique (16), le boîtier de vanne (110) faisant partie de la pièce de raccordement (28).
